# EUROPÄISCHE PATENTSCHRIFT

(11) **EP 3 019 890 B1**
(45) Veröffentlichungstag und Bekanntmachung des Hinweises auf die Patenterteilung: **16.09.2020**
(21) Anmeldenummer: 14723444.7
(22) Anmeldetag: 13.05.2014
(51) Int. Cl.: G01S 15/931, G01S 7/521, G01S 15/87

(54) **BAUGRUPPE FÜR EIN FAHRASSISTENZSYSTEM UND VERFAHREN ZUM BETRIEB EINES FAHRASSISTENZSYSTEMS**
ASSEMBLY FOR A DRIVER ASSISTANCE SYSTEM AND METHOD FOR OPERATING A DRIVER ASSISTANCE SYSTEM
MODULE DESTINÉ À UN SYSTÈME D'AIDE À LA CONDUITE ET PROCÉDÉ PERMETTANT DE FAIRE FONCTIONNER UN SYSTÈME D'AIDE À LA CONDUITE

(30) Priorität: 10.07.2013 DE 102013213475
(43) Veröffentlichungstag der Anmeldung: 18.05.2016
(73) Patentinhaber: Robert Bosch GmbH, 70442 Stuttgart (DE)
(72) Erfinder: SCHUMANN, Michael, 70597 Stuttgart (DE)
(86) Internationale Anmeldenummer: PCT/EP2014/059719
(87) Internationale Veröffentlichungsnummer: WO 2015/003835

(56) Entgegenhaltungen:
- DE-A1-102005 056 800
- DE-A1-102011 011 122
- DE-A1-102011 052 377

## Beschreibung

### Stand der Technik

Die Erfindung betrifft eine Baugruppe für ein Fahrassistenzsystem. Weiterhin werden ein Fahrassistenzsystem und ein Verfahren zum Betrieb eines Fahrassistenzsystems angegeben.

Ein Ultraschallsystem, welches zur Erfassung eines Fahrzeugumfelds eingesetzt wird, umfasst eine Vielzahl von Ultraschallsensoren, die jeweils dazu eingerichtet sind, eine Teilumgebung des Fahrzeugs zu erfassen. Beispielsweise können Sensoren im Frontbereich zur Erfassung einer vorderseitigen Fahrzeugumgebung und/oder Sensoren im Seitenbereich zur Erfassung eines Seitenbereichs des Fahrzeugs und/oder Sensoren im Heckbereich zur Erfassung einer rückwärtigen Umgebung des Fahrzeugs vorgesehen sein. Eine typische Systemauslegung umfasst 12 Ultraschallsensoren mit sternförmiger Verkabelung zu einem zentralen Steuergerät. Heutige Ultraschallarraysysteme umfassen beispielsweise vier Ultraschallarraysensoren und vier bis acht Ultraschallsensoren, ebenfalls mit sternförmiger Verkabelung zu einem zentralen Steuergerät.

Aus DE 10 2011 006 068 A1 ist eine Baugruppe für einen Fahrassistenzsystem bekannt, wobei ein Ultraschallsensor und ein Bildsensor miteinander integriert sind. Dabei sind die Sensoren jeweils separat an eine ECU angebunden, welche Daten der Sensoren verarbeitet, ggf. nach einer Vorverarbeitung.

DE 10 2005 040 997 A1 zeigt eine Vorrichtung mit einer Anzahl von Sensoren, die entlang paralleler Linien angeordnet sind, einer ersten und zweiten Anzahl von Schaltern, einer Datengeneratorschaltung, einer Adressengeneratorschaltung und einer Anzahl von Steuerlogikschaltungen. Hierbei können der Daten und Adressengenerator für jede Zeile außerhalb des Arrays auf dem Chip oder Nicht-Chip integriert in einem frei programmierbaren Gate Array, in einem digitalen anwendungsspezifischen, integrierten Schaltkreis oder in einer Zentraleinheit angeordnet sein. Ein weiteres Beispiel ist aus DE 10 2005 056800 bekannt.

### Offenbarung der Erfindung

### Vorteile der Erfindung

Bei einer erfindungsgemäßen Baugruppe für ein Fahrassistenzsystem nach Anspruch 1 sind in die Baugruppe zumindest ein Ultraschallarraysensor und zumindest ein weiterer Ultraschallsensor integriert.

Gemäß der Erfindung wird vorgeschlagen, eine kombinierte Sensorik in einer Baugruppe zu integrieren, um hieraus entstehende Synergieeffekte zu nutzen. Die gemeinsame Baugruppe mit einem oder mehreren Ultraschallarraysensoren und einem oder mehreren Ultraschallsensoren vereinfacht den Produktionsprozess bei Fahrzeugherstellern, da sich der Verkabelungsaufwand gegenüber solchen Systemen reduziert, bei welchen die Ultraschallarraysensoren und weiteren Ultraschallsensoren nicht integriert vorliegen.

Dabei weist die Baugruppe eine Kommunikationsschnittstelle auf. Die Kommunikationsschnittstelle kann eine Schnittstelle zu einem Bussystem sein, etwa ein CAN-Bus oder ein Flex-Ray-Bus, oder eine Schnittstelle unter Verwendung eines Punkt-zu-Punkt-Protokolls. Vorteilhaft ist die Baugruppe mittels Kommunikationsschnittstelle dazu eingerichtet, mit einer übergeordneten Steuereinheit, beispielsweise mit einem übergeordneten Fahrassistenzsystem (ADAS *Advanced Driver Assistance System*), oder mit einer nebengeordneten Baugruppe zu kommunizieren.

Über die Kommunikationsschnittstelle wird gemäß einer Ausführungsform der Erfindung eine Integration in eine übergeordnete Fahrassistenzsteuereinheit oder in einen Bodycomputer (BCM, *body control* module) des Fahrzeugs bereitgestellt. Die Integration kann mittels einfacher Schnittstellen erfolgen, so dass vorteilhaft keine Hardware-Komponenten in die Fahrassistenzsteuereinheit oder in den Bodycomputer integriert werden müssen. Auf eine separate Baugruppensteuereinheit für die Baugruppe wird gemäß einer bevorzugten Ausführungsform der Erfindung verzichtet, wodurch sich der Verkabelungsaufwand erheblich reduziert.

Nach einer alternativen Ausführungsform umfasst die Baugruppe eine eigene, separate Baugruppensteuereinheit (ECU, *electronic control unit*), die eingerichtet ist, die Signale des zumindest einen Ultraschallarraysensors und des zumindest einen weiteren Ultraschallsensors zu verarbeiten. Dies kann etwa dann vorgesehen sein, wenn die Integration in eine Steuereinheit eines übergeordneten Fahrassistenzsystems nicht möglich ist.

Steuereinheiten, die eingerichtet sind, die Baugruppe zu steuern, weisen beispielsweise Modulationseinheiten, Einheiten zur Kodierung oder Dechiffrierung von Signalen, oder auch Trigger-Vorrichtungen, um die Signale zeitlich zu steuern, auf. Zur Verarbeitung von eingehenden Signalen kann außerdem vorgesehen sein, dass derartige Steuereinheiten Filtervorrichtungen aufweisen, die beispielsweise Vorverstärker, Analog-Digital-Wandler, Demodulationsvorrichtungen und/oder Rauschunterdrückungseinheiten umfassen können.

Nach einer bevorzugten Ausführungsform führen Steuereinheiten, die eingerichtet sind, die Baugruppe zu steuern, anhand der Signale des zumindest einen Ultraschallarraysensors und des zumindest einen weiteren Ultraschallsensors eine Objekterkennung durch, insbesondere um Informationen über den Ort und die Geschwindigkeit von Objekten im Erfassungsbereich der Baugruppe zu ermitteln. Insbesondere können derartige Steuereinheiten dazu eingerichtet sein, die dem Ultraschallarraysensor zugeordneten Algorithmen auszuführen, beispielsweise den einzelnen Ultraschallsensoren des Ultraschallarraysensors eine Strahlform aufzuprägen, bzw. diese auszuwerten und Korrelationen der Signale der einzelnen Ultraschallsensoren untereinander zu bestimmen. Bevorzugt werden außerdem die Daten des zumindest einen weiteren Ultraschallsensors weiterverarbeitet und insbesondere zur Abstandsbestimmung von detektieren Objekten ausgewertet.

Durch die Integration elektronischer Komponenten, welche von den Ultraschallarraysensoren und den Ultraschallsensoren gemeinsam genutzt werden, wird gemäß bevorzugten Ausführungsformen der Erfindung außerdem auch die elektronische Hardware reduziert. Insbesondere können die Anbindung an ein Fahrzeugnetzwerk und der Anschluss an ein Bordnetz von den Ultraschallarraysensoren und weiteren Ultraschallsensoren gemeinsam genutzt werden, es können aber auch Komponenten der Objekterkennung und der Datenverarbeitung so ausgelegt werden, dass diese den Ultraschallarraysensoren und weiteren Ultraschallsensoren gemeinsam zugeordnet sind, insbesondere deren Daten und Messwerte gemeinsam verarbeiten.

Die Baugruppe weist bevorzugt einen Ultraschallarraysensor auf und bevorzugt zwei bis vier einzelne Ultraschallsensoren. Eine derartige Baugruppe ist beispielsweise auf der linken Fahrzeughälfte am vorderen Stoßfänger montiert, und eine zweite auf der rechten Fahrzeughälfte am vorderen Stoßfänger. Im Heckbereich können ebenfalls zwei derartige Baugruppen links und rechts am hinteren Stoßfänger vorgesehen sein, oder alternativ hierzu eine einzige Baugruppe mit einem zentralen Ultraschallarraysensor in der Mitte des Stoßfängers und vier einzelne Ultraschallsensoren über den Stoßfänger verteilt. Jede dieser Baugruppen fungiert bevorzugt autark, d. h. benötigt nur die Versorgungsspannung und eine Kommunikationsleitung, bevorzugt einen Bus, zu einer die Information verarbeitenden Steuereinheit, typischerweise einer Fahrassistenzsteuereinheit oder einem Bodycomputer.

Im Rahmen der Erfindung werden Ultraschallarraysensoren und Ultraschallsensoren auch allgemein als Sensoren bezeichnet, soweit es nicht auf deren jeweilige Unterscheidung ankommt. Bei dem Ultraschallsensor kann es sich um einen Ultraschallsender, -empfänger, oder einen kombinierten Sender/Empfänger ("Transducer") handeln, der beispielsweise auf piezoelektrischer Basis arbeitet. Der Ultraschallarraysensor umfasst eine Mehrzahl von Ultraschallsensoren, die auf einer bestimmten Grundfläche bevorzugt in regelmäßigen Abständen zueinander angeordnet sind. Beispielsweise können die Sensoren in einem kreis- oder rechteckförmigen oder quadratischen Bereich entweder gitterartig oder entlang einer Begrenzung des Bereichs angeordnet sein, insbesondere ringförmig, kreisförmig oder rechteckförmig. Die Anzahl der Ultraschallsensoren im Ultraschallarraysensor liegt bevorzugt zwischen 2 und 50. Geeignete Ultraschallarraysensoren ermöglichen eine Abstandsbestimmung von Objekten im Erfassungsbereich des Ultraschallarraysensors basierend auf der festen geometrischen Anordnung der Ultraschallsensoren auf der Grundfläche. Geeignete Ultraschallarraysensoren ermöglichen außerdem auch eine Richtungsbestimmung derartiger Objekte, beispielsweise mittels Azimut- und Polarwinkel.

Die Erfassungsbereiche des zumindest einen Ultraschallarraysensors und des zumindest einen weiteren Ultraschallsensors der Baugruppe können sich überlappen. Für den Fall, dass eine Ausrichtung des zumindest einen Ultraschallarraysensors und des zumindest einen weiteren Ultraschallsensors im Wesentlichen in die gleiche Richtung vorgesehen ist, kann ein Überlappen beispielsweise so vorliegen, dass ein Erfassungsbereich eines ersten Sensors vollständig in einem Erfassungsbereich eines zweiten Sensors liegt. In diesem Fall können die durch einen Sensor gewonnenen zusätzlichen Informationen zur Bestätigung der durch den anderen Sensor ermittelten Informationen dienen. Es kann auch vorgesehen sein, dass die beiden Sensoren einen großen gemeinsamen Erfassungsbereich aufweisen, beispielsweise zwischen 50 % und 90 %. Dies kann etwa dadurch erreicht werden, dass die Sensoren etwas voneinander beabstandet angeordnet sind oder dass diese windschief zueinander ausgerichtet, aber im Wesentlichen am gleichen Ort angeordnet sind. In diesen Fällen kann die durch einen Sensor gewonnene Information die durch den weiteren Sensor ermittelten Informationen ergänzen.

Bevorzugt ist jedoch vorgesehen, dass sich die Erfassungsbereiche des zumindest einen Ultraschallarraysensors und des zumindest einen weiteren Ultraschallsensors der Baugruppe nicht oder nicht signifikant überlappen. Dies umfasst solche Fälle, in denen ein Überlapp von weniger als 50 %, bevorzugt weniger als 10 % vorhanden ist und insbesondere solche Fälle, in denen kein Überlapp vorhanden ist. In diesen Fällen kann ebenfalls die durch einen Sensor gewonnene Information die durch den weiteren Sensor ermittelten Informationen ergänzen.

Nach einer weiteren Ausführungsform weist die Baugruppe eine Spannungsaufbereitungseinheit auf, die eingerichtet ist, den zumindest einen Ultraschallarraysensor und den zumindest einen weiteren Ultraschallsensor mit einer Betriebsspannung zu versorgen. Die Spannungsaufbereitungseinheit stellt eine Vorkonditionierung der Batteriespannung bereit, was insbesondere eine Entfernung von Spannungsspitzen, eine Pufferung und eine Filterung der Batteriespannung umfassen kann.

Die Baugruppe weist ferner bevorzugt eine digitale Schnittstelle zur zeitlichen Synchronisierung mehrerer Baugruppen auf. Die digitale Schnittstelle kann beispielsweise durch die oben beschriebene Kommunikationsschnittstelle implementiert sein. Hierdurch kann die Möglichkeit der Auswertung der Ultraschallsignale der Nachbarbaugruppen bereitgestellt werden. Damit für eine Laufzeitermittlung dieser Signale der Startzeitpunkt des ausgesendeten Ultraschallsignals bekannt ist, kann über die digitale Schnittstelle beispielsweise ein Trigger gesetzt werden, so dass die Nachbarbaugruppe zeitgleich oder mit einem definierten zeitlichen Versatz sendet und sich die Signale zuordnen lassen.

Nach einem weiteren Aspekt der Erfindung wird ein Fahrassistenzsystem vorgeschlagen, welches zumindest eine, bevorzugt drei oder vier der zuvor beschriebenen Baugruppen umfasst. Die Verkabelung mehrerer Baugruppen kann dabei etwa busförmig erfolgen oder sternförmig.

Nach einer Ausführungsform weist das Fahrassistenzsystem eine Steuereinheit auf, die eingerichtet ist, die Baugruppen zu steuern. Anstelle von separaten Baugruppensteuereinheiten, welche eingerichtet sind, eine weitergehende Signalverarbeitung, insbesondere eine Objekterkennung durchzuführen, umfasst das Fahrassistenzsystem in dieser Ausführungsform also eine zentrale Komponente, welche die Objekterkennung anhand der Rohdaten der Baugruppen oder verarbeiteten Daten der Baugruppen durchführt.

Anstelle von in die Baugruppen integrierten Spannungsaufbereitungseinheiten kann das Fahrassistenzsystem eine zentrale Spannungsaufbereitungsvorrichtung aufweisen, welche eine Vorkonditionierung der Betriebsspannung für sämtliche Ultraschallarraysensoren und Ultraschallsensoren bereitstellt.

Die erfindungsgemäße Baugruppe ist insbesondere bei solchen Fahrassistenzsystemen einsetzbar, welche eine Erfassung des Fahrzeugumfelds involvieren. Derartige Fahrassistenzsysteme sind beispielsweise Abstandsregeltempomaten (Adaptive Cruise Control, ACC), Kollisionsvermeidungsassistenten (zum Beispiel Back Over Avoidance Systems) oder Totwinkeldetektiersysteme (Blind Spot Detection Systems, BSD).

Die erfindungsgemäße Baugruppe wird dabei als Umfeldsensor eingesetzt, welcher beispielsweise im vorderen oder hinteren Stoßfänger des Fahrzeugs zum Zwecke der Parkassistenz und/oder Kollisionsvermeidung vorgesehen ist. Dabei werden üblicherweise Ultraschallsignale durch ein Medium wie Luft oder Wasser von einem Emitter zu einem Empfänger übermittelt oder von einem Emitter in eine Umgebung übermittelt oder von einem in der Umgebung befindlichen Objekt reflektierte Ultraschallsignale erfasst und die Laufzeit und/oder Laufzeitdifferenzen und/oder weitere Größen wie beispielsweise Amplituden und Phasen der Ultraschallsignale ermittelt und zur Detektion, Abstands- und ggf. Richtungsbestimmung von Objekten in der Fahrzeugumgebung verwendet.

Nach einem weiteren Aspekt wird ein Verfahren zum Betrieb eines derartigen Fahrassistenzsystems angegeben, das eine Baugruppe mit zumindest einem Ultraschallsensorarray, zumindest einem weiteren Ultraschallsensor und mit einer Baugruppensteuereinheit aufweist, wobei die Baugruppensteuereinheit Signale des zumindest einen Ultraschallsensorarrays und des zumindest einen weiteren Ultraschallsensors erfasst, verarbeitet und einer übergeordneten Steuereinheit zu Zwecken der Fahrassistenz bereitstellt. Bevorzugt führt die Baugruppensteuereinheit dabei die Objekterkennung durch.

### Kurze Beschreibung der Zeichnungen

Ausführungsbeispiele der Erfindung sind in den Zeichnungen dargestellt und in der nachfolgenden Beschreibung näher erläutert. Es zeigen
- Figur 1: eine schematische Darstellung eines erfindungsgemäßen Fahrassistenzsystems und
- Figur 2: eine schematische Darstellung eines Fahrzeugabschnittes, in welcher eine erfindungsgemäße Baugruppe eingebaut ist.

### Ausführungsformen der Erfindung

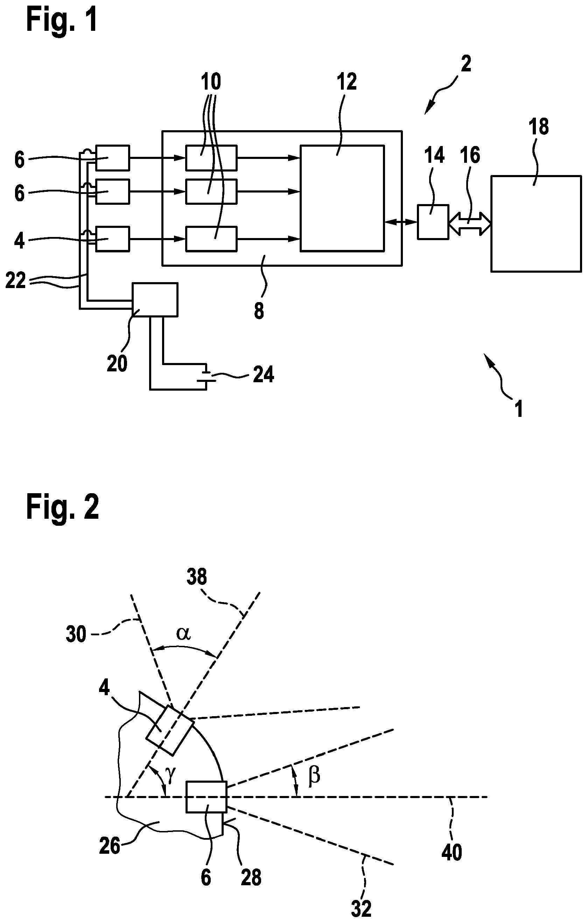

Figur 1 zeigt in schematischer Darstellung ein Fahrassistenzsystem 1, welches eine erfindungsgemäße Baugruppe 2 umfasst. In die Baugruppe 2 sind hier beispielhaft ein Ultraschallarraysensor 4 und zwei weitere Ultraschallsensoren 6 integriert. Das Ultraschallarraysensor 4 und die weiteren Ultraschallsensoren 6 sind beispielsweise in einem Stoßfänger eines Fahrzeugs verbaut und zur Erfassung eines Fahrzeugumfelds eingerichtet.

Die Baugruppe 2 umfasst in der dargestellten Ausführungsform eine Baugruppensteuereinheit 8, welche Signalverarbeitungseinrichtungen 10 aufweist. Obwohl in Figur 1 zu jedem der Baugruppe 2 zugeordneten Ultraschallarraysensor 4 und Ultraschallsensor 6 eine Signalverarbeitungseinrichtung 10 dargestellt ist, kann gemäß weiteren Ausführungsformen der Erfindung vorgesehen sein, dass eine gemeinsame Signalverarbeitungseinrichtung eingerichtet ist, die Signale mehrerer Ultraschallarraysensoren 4 und/oder Ultraschallsensoren 6 weiterzuverarbeiten. Gemäß bevorzugten Ausführungsformen der Erfindung kann außerdem vorgesehen sein, dass die Baugruppensteuereinheit 8 durch eine Steuereinheit ersetzt ist, die einem übergeordneten Fahrassistenzsystem zugeordnet ist.

Die empfangenen Echosignale weisen im Allgemeinen Nutzsignalanteile und Störsignalanteile auf und durchlaufen die Signalverarbeitungseinrichtungen 10 insbesondere auch, um den Nutzsignalanteil an den Echosignalen herauszufiltern. Hierzu werden die empfangenen Signale in der Signalverarbeitungseinrichtung 10 aufgearbeitet, beispielsweise verstärkt, digitalisiert, gesampled und durch Tief-, Hoch- oder Bandpässe gefiltert. Die Störsignale können außerdem Signaltransformationen unterworfen werden, beispielsweise einer Hilbert-Transformation. Die Signalverarbeitungseinrichtungen 10 können außerdem Vorrichtungen umfassen, in welchen sogenannte In-Phase-Komponenten des empfangenen Signals weiterverarbeitet werden und in welchen sogenannte Quadraturkomponenten des Signals weiterverarbeitet werden. Die Signalverarbeitungseinrichtungen 10 können weiterhin Modulationsvorrichtungen umfassen, über welche den Echosignalen weitere Signale aufmoduliert werden, beispielsweise Sinus-Signale, Rechtecksignale oder Sägezahnsignale. Die Signalverarbeitungseinrichtungen 10 können außerdem sogenannte angepasste Filter (MF, matched filter) aufweisen und weitere Vorrichtungen zur Signalkodierung oder - dekodierung. Weiterhin kann die Signalverarbeitungseinrichtung 10 eine Signalbewertungseinheit aufweisen, welche beispielsweise eine Schwelle für die Intensität des Signals bereitstellt, oberhalb welcher das Signal als gültig erkannt wird. Die den Ultraschallarraysensoren 4 zugeordneten Signalverarbeitungseinrichtungen 10 können außerdem typische Algorithmen abarbeiten, welche zur Auswertung der Signale der Ultraschallarraysensoren 4 geeignet sind, beispielsweise sogenannte Beam-Forming- oder Korrelationsbestimmungsalgorithmen.

Die von der Signalverarbeitungseinrichtung 10 verarbeiteten Signale werden einer Objekterkennungseinrichtung 12 zugeführt. In der Objekterkennungseinrichtung 12 werden anhand der verarbeiteten Signale Informationen über Objekte im Erfassungsbereich der Sensoren ermittelt, sogenannte Objektinformationen. Objektinformationen umfassen beispielsweise einen Abstand eines ermittelten Objekts zur Baugruppe 2, dessen Richtung, beispielsweise in Form von Azimut und Polarkoordination ϕ und θ, sowie bevorzugt außerdem Informationen über die Intensität des ermittelten Signals.

Die Objekterkennungseinrichtung 12 ermittelt außerdem anhand der Signale der weiteren Ultraschallsensoren 6 zusätzliche Informationen zum Objekt. Die Güte der Objektinformation wird gesteigert, wenn diese durch den zusätzlichen Sensor bestätigt wird. In bevorzugten Ausführungsformen dienen die weiteren Sensoren insbesondere dazu, den Erfassungsbereich zu erweitern.

Die von der Objekterkennungseinrichtung 12 ermittelten Objektinformationen werden in dieser Ausführungsform über eine Bus-Schnittstelle 14 auf einem Bussystem 16 einer weiteren Steuereinheit 18 bereitgestellt. Die dargestellte weitere Steuereinheit 18 kann beispielsweise eine übergeordnete Steuereinheit sein, wie etwa ein ADAS (Advanced Driver Assistance System), oder auch eine nebengeordnete Steuereinheit, welches ebenfalls Zugang zum Bussystem 16 hat. Alternativ zu dem Bussystem 16 mit der Bus-Schnittstelle 14 kann auch eine Punkt-zu-Punkt-Leitung mit entsprechenden Schnittstellen vorgesehen sein.

Die Baugruppe 2 umfasst eine Spannungsaufbereitungseinheit 20. Die Spannungsaufbereitungseinheit 20 ist dazu eingerichtet, eine von einer Spannungsquelle 24, beispielsweise der Fahrzeugbatterie, bereitgestellte Spannung für die Ultraschallarraysensoren 4 und Ultraschallsensoren 6 vorzukonditionieren. Die Spannungsaufbereitungseinheit 20 umfasst hierzu beispielsweise Puffervorrichtungen, beispielsweise Kondensatoren, um kurzfristige Spannungseinbrüche abzufangen, die beispielsweise dadurch entstehen, dass Leistungsabnehmer zugeschaltet werden, wie z.B. bei einer Start-Stopp-Automatik ein Startergenerator. Weiterhin kann die Spannungsaufbereitungseinheit 20 Filtervorrichtungen oder Spannungswandler umfassen, um den eingesetzten Ultraschallarraysensoren die nötige Betriebsspannung bereitzustellen. Die Spannungsaufbereitungseinheit 20 kontaktiert den Ultraschallarraysensor 4 und Ultraschallsensoren 6 über Leiterbahnen 22, wobei im Falle der Ultraschallsensoren 6 Kabel verwendet werden, da diese nicht im Gehäuse des Ultraschallarraysensors 4 angeordnet sind.

Sind mehrere Baugruppen mit je einem Ultraschallarraysensor 4 vorgesehen, dann gibt es die Möglichkeit, dass in jeder Baugruppe eine Spannungsaufbereitungseinheit 20 vorhanden ist. Dies ist besonders vorteilhaft, da damit nur die Daten an eine übergeordnete Einheit, z. B. ein übergeordnetes Fahrassistenzsystem, übermittelt werden müssen und der Integrationsaufwand sehr gering ist. Alternativ hierzu kann die Spannungsaufbereitungseinheit 20 in dem übergeordneten Fahrassistenzsystem untergebracht sein. Hierfür ist eine Integration der Spannungsaufbereitungseinheit 20 in der Steuereinheit des übergeordneten Fahrassistenzsystems notwendig, womit ein höherer Entwicklungsaufwand einhergeht.

Figur 2 zeigt einen schematischen Ausschnitt eines Fahrzeugabschnitts 26, an dessen Außenseite 28 ein Ultraschallarraysensor 4 und ein Ultraschallsensor 6 in einem Abstand 36 voneinander benachbart zueinander angeordnet sind. Der Ultraschallarraysensor 4 und der Ultraschallsensor 6 sind Teil einer mit Bezug zu Figur 1 beschriebenen Baugruppe 2. Der Ultraschallarraysensor 4 weist einen Erfassungsbereich 30 auf, welcher durch einen Winkel α gegenüber einer Ausrichtung 38 des Ultraschallarraysensors 4 gekennzeichnet ist. Der Ultraschallsensor 6 weist einen Erfassungsbereich 32 auf, welcher durch einen Winkel β gegenüber einer Ausrichtung 40 des Ultraschallsensors 6 gekennzeichnet ist.

Im dargestellten Ausführungsbeispiel sind der Ultraschallarraysensor 4 und der Ultraschallsensor 6 im so zueinander angeordnet, so dass ihre Ausrichtungen 38, 40 einen Winkel γ miteinander einschließen. Diese Ausrichtung des Ultraschallarraysensors 4 gegenüber dem Ultraschallsensor 6 führt dazu, dass sich die Erfassungsbereiche 30, 32 nicht überlappen. Durch Auswertung der Objektinformationen des einen Sensors können die durch den weiteren Sensor ermittelten Objektinformationen ergänzt werden.

Eine andere Situation liegt vor, wenn der Ultraschallarraysensor 4 und der Ultraschallsensor 6 parallel zueinander aber voneinander beabstandet angeordnet werden. Wird der Abstand 36 zwischen den Sensoren groß genug gewählt, so ergibt sich ein Erfassungsbereich 32 des Ultraschallsensors 6, welcher nicht oder nicht signifikant mit dem Erfassungsbereich 30 des Ultraschallarraysensors 4 überlappt. Auch in diesem Fall können durch Auswertung der Objektinformationen des einen Sensors die durch den weiteren Sensor ermittelten Objektinformationen ergänzt werden.

Alternativ hierzu kann auch vorgesehen sein, dass der Erfassungsbereich eines Sensors im Wesentlichen vollständig in den Erfassungsbereich des weiteren Sensors fällt. In diesem Fall können durch Auswertung der Objektinformationen des einen Sensors die durch den weiteren Sensor ermittelten Objektinformationen validiert werden.

Die Erfindung ist nicht auf die hier beschriebenen Ausführungsbeispiele und die darin hervorgehobenen Aspekte beschränkt. Vielmehr ist innerhalb des durch die Ansprüche vorgegebenen Bereichs eine Vielzahl von Abwandlungen möglich, die im Rahmen fachmännischen Handelns liegen.

## Patentansprüche

1. Baugruppe (2) für ein Fahrassistenzsystem (1), wobei in der Baugruppe (2) zumindest ein Ultraschallarraysensor (4) zumindest ein weiterer Ultraschallsensor (6) mit einer Baugruppensteuereinheit (8) zur Signalerfassung und -verarbeitung verbunden und integriert sind, wobei die Baugruppe (2) eine Kommunikationsschnittstelle (14) aufweist.

2. Baugruppe (2) nach einem der vorhergehenden Ansprüche, **dadurch gekennzeichnet, dass** die Baugruppe (2) die Baugruppensteuereinheit (8) aufweist, die eingerichtet ist, Signale des zumindest einen Ultraschallarraysensors (4) und des zumindest einen weiteren Ultraschallsensors (6) zu verarbeiten.

3. Baugruppe (2) nach Anspruch 2, **dadurch gekennzeichnet, dass** die Baugruppensteuereinheit (8) eingerichtet ist, anhand der Signale des zumindest einen Ultraschallarraysensors (4) und des zumindest einen weiteren Ultraschallsensors (6) eine Objekterkennung durchzuführen.

4. Baugruppe (2) nach einem der vorhergehenden Ansprüche, **dadurch gekennzeichnet, dass** sich Erfassungsbereiche (30, 32) des zumindest einen Ultraschallarraysensors (4) und des zumindest einen weiteren Ultraschallsensors (6) nicht überlappen.

5. Baugruppe (2) nach einem der vorhergehenden Ansprüche, **dadurch gekennzeichnet, dass** die Baugruppe (2) eine Spannungsaufbereitungseinheit (20) aufweist, die eingerichtet ist, den zumindest einen Ultraschallarraysensor (4) und den zumindest einen weiteren Ultraschallsensor (6) mit einer Betriebsspannung zu versorgen.

6. Fahrassistenzsystem (1) für ein Fahrzeug mit einer Baugruppe (2) nach Anspruch 1, wobei das Fahrassistenzsystem (1) eine Steuereinheit aufweist, die eingerichtet ist, die Baugruppe (2) zu steuern.

7. Fahrassistenzsystem (1) für ein Fahrzeug mit einer Baugruppe (2) nach einem der Ansprüche 2 bis 4 oder Fahrassistenzsystem (1) nach Anspruch 6, wobei das Fahrassistenzsystem (1) eine zentrale Spannungsaufbereitungseinheit aufweist, die eingerichtet ist, die Ultraschallarraysensoren (4) und Ultraschallsensoren (6) mit einer Betriebsspannung zu versorgen.

8. Verfahren zum Betrieb eines Fahrassistenzsystems (1), das eine Baugruppe (2) mit zumindest einem Ultraschallarraysensor (4), zumindest einem weiteren Ultraschallsensor (6) und einer Kommunikationsschnittstelle (14) aufweist und mit einer Baugruppensteuereinheit (8), wobei die Baugruppensteuereinheit (8) Signale des zumindest einen Ultraschallarraysensors (4) und des zumindest einen weiteren Ultraschallsensors (6) erfasst, verarbeitet und einer weiteren Steuereinheit (18) zu Zwecken der Fahrassistenz bereitstellt.

9. Verfahren nach Anspruch 8, **dadurch gekennzeichnet, dass** die Baugruppensteuereinheit (8) eine Objekterkennung anhand von Signalen des zumindest einen Ultraschallarraysensors (4) und des zumindest einen weiteren Ultraschallsensors (6) durchführt.

## Claims

1. Assembly (2) for a driving assistance system (1), wherein at least one ultrasonic array sensor (4) and at least one further ultrasonic sensor (6) are connected to an assembly control unit (8) for signal capture and processing and are integrated in the assembly (2), wherein the assembly (2) has a communication interface (14).

2. Assembly (2) according to one of the preceding claims, **characterized in that** the assembly (2) has the assembly control unit (8) which is configured to process signals from the at least one ultrasonic array sensor (4) and from the at least one further ultrasonic sensor (6).

3. Assembly (2) according to Claim 2, **characterized in that** the assembly control unit (8) is configured to carry out object detection on the basis of the signals from the at least one ultrasonic array sensor (4) and from the at least one further ultrasonic sensor (6).

4. Assembly (2) according to one of the preceding claims, **characterized in that** capture regions (30, 32) of the at least one ultrasonic array sensor (4) and of the at least one further ultrasonic sensor (6) do not overlap.

5. Assembly (2) according to one of the preceding claims, **characterized in that** the assembly (2) has a voltage conditioning unit (20) which is configured to supply the at least one ultrasonic array sensor (4) and the at least one further ultrasonic sensor (6) with an operating voltage.

6. Driving assistance system (1) for a vehicle having an assembly (2) according to Claim 1, wherein the driving assistance system (1) has a control unit which is configured to control the assembly (2).

7. Driving assistance system (1) for a vehicle having an assembly (2) according to one of Claims 2 to 4 or a driving assistance system (1) according to Claim 6, wherein the driving assistance system (1) has a central voltage conditioning unit which is configured to supply the ultrasonic array sensors (4) and ultrasonic sensors (6) with an operating voltage.

8. Method for operating a driving assistance system (1) which has an assembly (2) having at least one ultrasonic array sensor (4), at least one further ultrasonic sensor (6) and a communication interface (14) and having an assembly control unit (8), wherein the assembly control unit (8) captures and processes signals from the at least one ultrasonic array sensor (4) and from the at least one further ultrasonic sensor (6) and makes said signals available to a further control unit (18) for the purposes of driving assistance.

9. Method according to Claim 8, **characterized in that** the assembly control unit (8) carries out object detection on the basis of signals from the at least one ultrasonic array sensor (4) and from the at least one further ultrasonic sensor (6).

## Revendications

1. Module (2) destiné à un système d'aide à la conduite (1), dans lequel au moins un capteur à réseau ultrasonore (4) et au moins un autre capteur ultrasonore (6) sont reliés et intégrés dans le module (2) avec une unité de commande de module (8) destinée à acquérir et à traiter les signaux,
dans lequel le module (2) comporte une interface de communication (14).

2. Module (2) selon l'une des revendications précédentes, **caractérisé en ce que** le module (2) comporte l'unité de commande de module (8) qui est conçue pour traiter des signaux provenant dudit au moins un capteur à réseau ultrasonore (4) et dudit au moins un autre capteur ultrasonore (6).

3. Module (2) selon la revendication 2, **caractérisé en ce que** l'unité de commande de module (8) est conçue pour effectuer une reconnaissance d'objet sur la base des signaux provenant dudit au moins un capteur à réseau ultrasonore (4) et dudit au moins un autre capteur ultrasonore (6).

4. Module (2) selon l'une des revendications précédentes, **caractérisé en ce que** des zones de détection (30, 32) dudit au moins un capteur à réseau ultrasonore (4) et dudit au moins un autre capteur ultrasonore (6) ne se chevauchent pas.

5. Module (2) selon l'une des revendications précédentes, **caractérisé en ce que** le module (2) comporte une unité de conditionnement de tension (20) qui est conçue pour alimenter en tension de fonctionnement ledit au moins un capteur à réseau ultrasonore (4) et ledit au moins un autre capteur ultrasonore (6).

6. Système d'aide à la conduite (1) destiné à un véhicule comprenant un module (2) selon la revendication 1, dans lequel le système d'aide à la conduite (1) comporte une unité de commande qui est conçue pour commander le module (2).

7. Système d'aide à la conduite (1) destiné à un véhicule comprenant un module (2) selon l'une des revendications 2 à 4 ou système d'aide à la conduite (1) selon la revendication 6, dans lequel le système d'aide à la conduite (1) comporte une unité de conditionnement de tension qui est conçue pour alimenter en tension de fonctionnement les capteurs à réseau ultrasonores (4) et les capteurs ultrasonores (6).

8. Procédé permettant de faire fonctionner un système d'aide à la conduite (1) qui comporte un module (2) comprenant au moins un capteur à réseau ultrasonore (4), au moins un autre capteur ultrasonore (6) et une interface de communication (14) ainsi qu'une unité de commande de module (8), dans lequel l'unité de commande de module (8) acquiert et traite des signaux provenant dudit au moins un capteur à réseau ultrasonore (4) et dudit au moins un autre capteur ultrasonore (6) et les fournit à une autre unité de commande (18) à des fins d'aide à la conduite.

9. Procédé selon la revendication 8, **caractérisé en ce que** l'unité de commande de module (8) effectue une reconnaissance d'objet sur la base de signaux provenant dudit au moins un capteur à réseau ultrasonore (4) et dudit au moins un autre capteur ultrasonore (6).
